# EUROPEAN PATENT APPLICATION

(11) **EP 4 840 798 A1**
(43) Date of publication of application: **18.11.2026**
(21) Application number: 25175697.9
(22) Date of filing: 12.05.2025
(51) Int. Cl.: B65G 37/02, B65G 54/02, H02P 25/064

(54) **PLANAR TRANSPORT SYSTEM AND METHOD FOR CONTROLLING A PLANAR TRANSPORT SYSTEM**

(71) Applicant: Robert Bosch GmbH, 70442 Stuttgart (DE)
(72) Inventor: Schmeits, Cedric, Eindhoven (NL)

(57) **Abstract**

The invention relates to a planar transport system comprising a transport surface (10) subdivided into a plurality of controllable tiles (12), each tile comprising an array of actuators for manipulating a magnetic field to move at least one mover (14) over the transport surface (10); at least one mover (14) configured to move over the transport surface (10) by magnetic interaction with the actuators; at least one primary setpoint generator (16) configured to generate first setpoints defining a trajectory for the mover (14); at least one modular setpoint generator (18) configured to generate additional setpoints; and a control unit (20) configured to combine the first setpoints and the additional setpoints into combined setpoints and to control the actuators based on the combined setpoints to move the mover (14) along the trajectory with an additional movement pattern. Furthermore, the invention relates to a computer-implemented method for controlling a planar transport system.

## Description

The present invention relates to the field of planar transport systems, and more particularly to systems and methods for controlling the movement of transport elements - commonly referred to as movers - on a transport surface using magnetic manipulation. Such systems are widely used in various industrial and logistics environments where precise, flexible, and programmable movement of goods or components is required.

Planar transport systems, also known as planar motor systems or planar drive systems, typically consist of a flat transport surface composed of multiple actuators arranged in a matrix or grid pattern. These actuators, often electromagnetic in nature, manipulate localized magnetic fields that interact with magnetic elements attached to or embedded within the movers. By selectively rotating different actuators in the grid, it is possible to move the movers along predetermined paths with a high degree of accuracy. Such systems are designed to facilitate non-contact transport, meaning that the movers hover or glide slightly above the transport surface, reducing friction and wear and allowing smooth, multidirectional movement.

The use of planar transport systems has gained significant traction in various industries, including semiconductor manufacturing, pharmaceutical processing, food and beverage production, and automated assembly lines. These systems are particularly valued for their ability to handle delicate, irregularly shaped, or contamination-sensitive items, as well as for their capacity to execute precise positioning and orientation tasks.

Control of the movement within a planar transport system is generally achieved through a setpoint generator. A setpoint generator computes a trajectory or path for a mover, which is then executed by a controller that orientates the relevant actuators to produce the required magnetic fields. The design of these control systems typically focuses on achieving smooth and efficient transport from one location to another within the working area of the planar transport surface.

EP3556007A1 relates to a transport device with a stator and at least one transport element. The transport device is designed to transport the at least one transport element in a controlled manner relative to the stator, and the stator or the at least one transport element has multiple movably arranged actuating magnets, each of which is connected to the stator or transport element via an actuating element. The actuating element is designed to change the position and/or the orientation of the connected actuating magnet relative to the stator or transport element in a controlled manner. The respective other part, i.e. the transport element or stator, has at least two stationary magnets which are connected to the respective other part in a fixed manner. Furthermore, the stator and the at least one transport element are magnetically coupled by means of the stationary magnets and actuating magnets, and the transport device is designed to transport the at least one transport element relative to the stator by the control positioning and/or orientation of the actuating magnets by means of the actuating magnets.

Standard implementations of planar transport systems often feature a central control unit that manages the computation of setpoints, real-time monitoring of mover positions, and the coordination of actuator activations. Sensors such as optical trackers, accelerometers, or proximity detectors are frequently integrated into these systems to provide feedback on mover location and orientation, which enables closed-loop control and improves precision.

Challenges encountered in conventional planar transport systems include the need for precise synchronization of actuators, real-time collision avoidance between multiple movers operating simultaneously, and efficient handling of complex movement patterns, particularly in highspeed production environments. Additionally, system flexibility and the ability to adapt to varying operational requirements without extensive reprogramming are becoming increasingly important as industries push toward more agile manufacturing processes.

Planar transport systems must also contend with dynamic effects that can occur during movement, especially when transporting liquid-filled containers or fragile items. Movements that cause abrupt accelerations or decelerations can lead to instabilities such as sloshing of liquids or unintended displacement of the transported goods. As a result, there is a continuous drive to enhance the robustness and adaptability of movement control algorithms to accommodate such challenges.

Moreover, advancements in software development, modular control architectures, and real-time processing capabilities have opened new possibilities for improving the performance, scalability, and customization of planar transport systems. This has led to ongoing research and development efforts focused on improving both hardware and software aspects of these systems to meet the evolving demands of modern industrial applications.

In summary, planar transport systems represent a critical component in the automation landscape, offering precise, flexible, and contactless movement of items across a controlled surface. The continuous evolution of these systems is driven by the need for higher throughput, improved precision, and increased adaptability, ensuring that they remain an essential technology in the future of automated manufacturing and logistics operations.

It is therefore an object of the present invention to provide an improved planar transport system that enables enhanced flexibility and precision in the control of mover trajectories and movement patterns.

This object is solved by a planar transport system having the features of claim 1.

Furthermore, the object is solved by a computer-implemented method for controlling a planar transport system having the features of claim 10.

According to a first aspect of the invention, a planar transport system is provided, comprising: a transport surface subdivided into a plurality of controllable tiles, each tile comprising an array of actuators for manipulating a magnetic field to move at least one mover over the transport surface; at least one mover configured to move over the transport surface by magnetic interaction with the actuators; at least one primary setpoint generator configured to generate first setpoints defining a trajectory for the mover; at least one modular setpoint generator configured to generate additional setpoints; and a control unit configured to combine the first setpoints and the additional setpoints into combined setpoints and to control the actuators based on the combined setpoints to move the mover along the trajectory with an additional movement pattern.

According to a second aspect of the invention, a computer-implemented method for controlling a planar transport system is provided, the planar transport system comprising a transport surface subdivided into a plurality of controllable tiles, each tile comprising an array of actuators for generating a magnetic field to move at least one mover over the transport surface, the method comprising: generating, by at least one primary setpoint generator, first setpoints defining a trajectory for the mover; generating, by at least one modular setpoint generator, additional setpoints; combining, by a control unit, the first setpoints and the additional setpoints into combined setpoints; and controlling the actuators based on the combined setpoints to move the mover along the trajectory with an additional movement pattern.

The transport surface is a planar structure composed of multiple tiles arranged side by side, forming the operative area of the planar transport system. It provides the physical platform over which movers travel and is equipped with actuators capable of manipulating localized magnetic fields for moving and positioning movers without direct mechanical contact.

A controllable tile is a modular unit of the transport surface that houses an array of actuators. Each tile operates autonomously or in coordination with adjacent tiles to contribute localized magnetic fields, enabling precise control of movers' movement and orientation over its surface area.

An array of actuators refers to a group of individual electromagnetic components arranged in a matrix pattern within each controllable tile. Each actuator orientates a magnetic field, and coordinated activation of multiple actuators allows for precise movement, levitation, and orientation control of the mover over the transport surface.

A mover is a transport element configured to move across the transport surface. It typically includes a magnetic or magnetizable component that interacts with the magnetic fields manipulated by the actuators, allowing for contactless, multidirectional movement and precise positioning on the transport surface.

The primary setpoint generator is a computational module or software unit that calculates the main trajectory for a mover. It produces a sequence of setpoints that define the intended path from one location to another across the transport surface, typically specifying position and orientation coordinates over time.

The modular setpoint generator is an independent computational module that generates additional setpoints, which can be superimposed onto the setpoints of the primary generator. It allows for added movement patterns, such as oscillations or rotations, enabling more complex and customizable mover behavior.

Setpoints are defined values representing desired physical states of the mover, including position, orientation, or velocity, at specific times. First setpoints define the basic trajectory, while additional setpoints specify supplementary movement patterns to be superimposed on the trajectory for enhanced motion control.

The control unit is a hardware and/or software system responsible for processing the setpoints, combining the primary and additional setpoints into a unified control signal, and coordinating the activation of actuators. It may include centralized and distributed components to manage the real-time execution of movement commands.

Combined setpoints are the result of merging the first setpoints from the primary setpoint generator with the additional setpoints from the modular setpoint generator. These combined setpoints define the full movement pattern of the mover, integrating both basic and supplementary movements for execution by the actuators.

The planar transport system described integrates a modular and scalable transport surface, which is subdivided into controllable tiles. Each tile contains an array of actuators configured to manipulate magnetic fields for moving at least one mover across the surface without direct mechanical contact. By using an array of actuators within each tile, precise local control of the mover's position and orientation is facilitated, and the system can be extended in size by adding more tiles to meet specific application requirements.

The inclusion of at least one mover equipped for magnetic interaction with the actuators allows for contactless transport over the surface, minimizing wear and contamination risks that are typically associated with mechanical movement systems. The mover's design supports reliable levitation and multidirectional movement across the transport surface.

Movement control is organized through a combination of at least one primary setpoint generator and at least one modular setpoint generator. The primary setpoint generator provides the foundational trajectory for the mover, ensuring it follows a defined path across the transport surface. The modular setpoint generator enables the creation of additional movement patterns, allowing the system to incorporate more complex or nuanced movements without altering the basic trajectory.

The control unit plays a central role in merging the outputs from the primary and modular setpoint generators. By combining the first setpoints and the additional setpoints into unified combined setpoints, the system generates movement instructions that include both basic and superimposed patterns. The control unit also governs the actuators based on these combined setpoints, ensuring the movers execute the intended composite movements accurately.

This system structure supports flexible and precise transport capabilities, integrating modular components that can be configured and combined to perform sophisticated movement tasks within a unified control architecture.

In a further aspect, it is proposed that the additional setpoints generated by the at least one modular setpoint generator define at least one of an oscillatory movement, a rotational movement, or a translational modulation superimposed on the trajectory of the mover.

The system enables the mover to perform complex motion profiles by overlaying oscillatory, rotational, or translational modulations onto its primary trajectory. This capability allows more sophisticated movement patterns to be executed without altering the base path, supporting tasks such as stirring, tilting, or compensating for external dynamics while the mover follows its main route.

In a further aspect, it is proposed that the control unit comprises a transition module configured to implement a time-based transition function between activation and deactivation of the modular setpoint generator, the transition function defining a gradual blending of the additional setpoints with the first setpoints. A transition module is a part of the control unit configured to apply a time-based blending function to the setpoints when the modular setpoint generator is activated or deactivated, ensuring smooth motion transitions.

Smooth activation and deactivation of modular setpoint generators are ensured by applying a time-based blending function. This prevents abrupt changes in movement by gradually increasing or decreasing the influence of the additional setpoints. The controlled blending process ensures a continuous, seamless movement experience when transitioning between different operational states.

In a further aspect, it is proposed that the transition module is configured to allow adjustment of at least one transition parameter, the transition parameter comprising a duration or a curve shape of the time-based transition function. A transition parameter is a configurable setting within the transition module, such as the duration or curve shape, that defines characteristics of the time-based transition between active and inactive states.

Movement transitions can be fine-tuned by adjusting parameters such as transition duration or curve shape. These settings allow customization of how quickly and smoothly the system blends between the additional and primary setpoints, ensuring that the system can be adapted to suit different operational requirements and environmental conditions without manual recalibration of core control logic.

In a further aspect, it is proposed that the at least one modular setpoint generator is implemented as a loadable software module configured to be uploaded into a memory of the control unit and executed by the control unit, the software module being programmable to define user-specific movement patterns. A loadable software module is a modular software unit that implements a modular setpoint generator, designed to be uploaded into the control unit's memory and executed to enable user-defined movement patterns.

The modular setpoint generator is implemented as a programmable software module that can be uploaded into the system's memory and executed dynamically. This structure enables users to define and deploy custom movement patterns without modifying the hardware, supporting flexible system upgrades and easy adaptation to various application scenarios.

In a further aspect, it is proposed that the control unit is configured to assign different modular setpoint generators to different movers, allowing independent superimposed movement patterns for multiple movers operating simultaneously on the transport surface.

Independent movement patterns for multiple movers are supported by assigning different modular setpoint generators to each mover. This allows simultaneous execution of distinct movement profiles across various movers on the same transport surface, facilitating coordinated yet individualized control for multi-mover environments without interference between different tasks.

In a further aspect, the planar transport system further comprises at least one sensor configured to detect at least one of a position and/or an orientation of the mover, the control unit being configured to adjust the combined setpoints based on feedback from the sensor.

Sensors integrated into the system detect mover position and orientation, enabling the control unit to adjust the combined setpoints in real time. This feedback loop enhances the accuracy and responsiveness of movement control, compensating for deviations or disturbances that may arise during operation, and ensuring precise trajectory execution.

In a further aspect, it is proposed that the control unit comprises a distributed architecture including a central controller configured to combine the first setpoints and the additional setpoints into combined setpoints defining the mover trajectory, and to calculate actuator-specific control data based on the combined setpoints, the local controllers being provided in each tile and configured to receive the actuator-specific control data from the central controller and to control the actuators within the respective tile based on the actuator-specific control data.

A central controller is a processing unit within the control architecture that combines primary and additional setpoints into unified combined setpoints and distributes them to local controllers.

A local controller is a controller located within each tile that receives combined setpoints from the central controller and actuates the local actuators accordingly.

The control unit and central controller are configured to generate and combine setpoints defining mover trajectories. It is noted that lower-level control processes, such as the calculation of actuator-specific forces, torques, or magnet orientations (e.g., using an AngleCalculation algorithm), are not part of the invention but are part of the subsequent motion execution system that actuates the transport surface

The distributed control architecture uses a central controller to combine setpoints and local controllers within each tile to manage actuator execution. This division of tasks reduces processing load on the central unit and allows scalable expansion of the system, with each tile autonomously handling its own actuator control based on shared combined setpoints.

In a further aspect, it is proposed that the at least one mover comprises a floating body with a magnetic element, the magnetic element being configured to interact with the magnetic fields of the actuators to enable levitation and multi-axis movement over the transport surface.

A floating body is a mover structure comprising a magnetic element, designed to levitate and move above the transport surface through magnetic field interaction.

The mover features a floating body with an integrated magnetic element that levitates above the transport surface through magnetic interaction with the actuators. This design enables contactless transport with high freedom of movement across multiple axes, reducing mechanical wear and allowing precise, frictionless maneuvering across the entire surface.

The herein described features of planar transport system are also disclosed for the computer-implemented method for controlling a planar transport system and vice versa.

For a more complete understanding of the present invention and advantages thereof, reference is now made to the following description taken in conjunction with the accompanying drawings. The invention is explained in more detail below using exemplary embodiments, which are specified in the schematic figure of the drawings, in which:
Fig. 1 shows a diagram of a planar transport system according to a preferred embodiment of the invention; and
Fig. 2 shows a flowchart of a computer-implemented method for controlling a planar transport system according to the preferred embodiment of the invention.

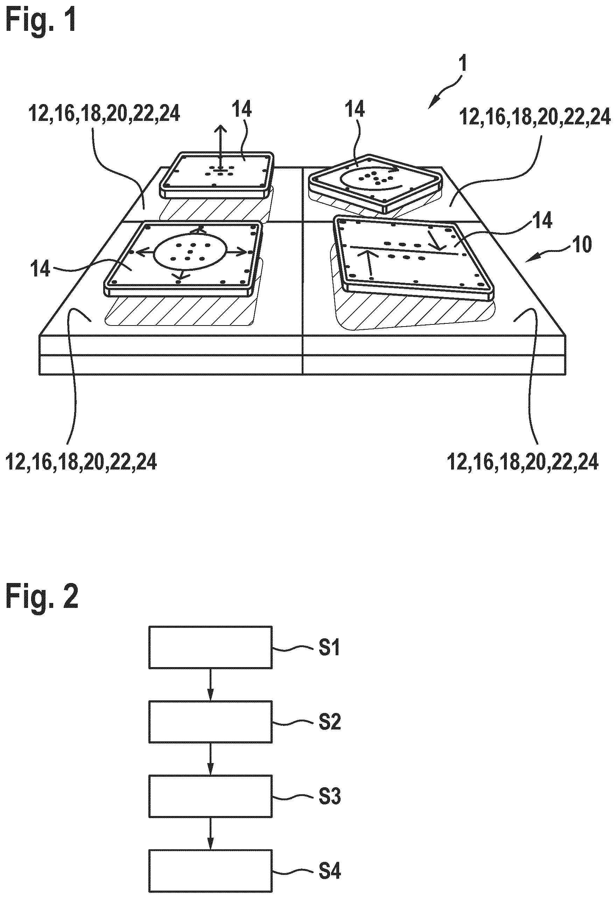

Fig. 1 depicts a planar transport system 1 comprising: a transport surface 10 subdivided into a plurality of controllable tiles 12, each tile comprising an array of actuators for manipulating the magnetic field to move at least one mover 14 over the transport surface 10; at least one mover 14 configured to move over the transport surface 10 by magnetic interaction with the actuators; at least one primary setpoint generator 16 configured to generate first setpoints defining a trajectory for the mover 14; at least one modular setpoint generator 18 configured to generate additional setpoints; and a control unit 20 configured to combine the first setpoints and the additional setpoints into combined setpoints and to control the actuators based on the combined setpoints to move the mover 14 along the trajectory with an additional movement pattern.

The additional setpoints generated by the at least one modular setpoint generator 18 define at least one of an oscillatory movement, a rotational movement, or a translational modulation superimposed on the trajectory of the mover 14.

Furthermore, the control unit 20 comprises a transition module 22 configured to implement a time-based transition function between activation and deactivation of the modular setpoint generator 18, the transition function defining a gradual blending of the additional setpoints with the first setpoints. The transition module 22 is configured to allow adjustment of at least one transition parameter, the transition parameter comprising a duration or a curve shape of the time-based transition function.

The at least one modular setpoint generator 18 is implemented as a loadable software module configured to be uploaded into a memory of the control unit 20 and executed by the control unit 20, the software module being programmable to define user-specific movement patterns. In addition, the control unit 20 is configured to assign different modular setpoint generators 18 to different movers 14, allowing independent superimposed movement patterns for multiple movers 14 operating simultaneously on the transport surface 10.

The planar transport system 1 further comprises at least one sensor 24 configured to detect at least one of a position and/or an orientation of the mover 14, the control unit 20 being configured to adjust the combined setpoints based on feedback from the sensor 24.

In the current embodiment, combined setpoints are generated and applied locally within each tile's controller, and setpoints are not communicated between devices. Alternative architectures with inter-tile communication may be also be implemented.

In such an alternative architecture, the control unit 20 comprises a distributed architecture including a central controller configured to combine the first setpoints and the additional setpoints into combined setpoints, and local controllers provided in each tile, each local controller being configured to receive the combined setpoints from the central controller and to control the actuators within the respective tile based on the combined setpoints.

The at least one mover 14 comprises a floating body with a magnetic element, the magnetic element being configured to interact with the magnetic fields of the actuators to enable levitation and multi-axis movement over the transport surface 10.

Fig. 2 depicts a computer-implemented method for controlling a planar transport system 1, the planar transport system comprising a transport surface 10 subdivided into a plurality of controllable tiles 12, each tile comprising an array of actuators for manipulating a magnetic field to move at least one mover 14 over the transport surface 10, the method comprising: generating S1, by at least one primary setpoint generator 16, first setpoints defining a trajectory for the mover 14; generating S2, by at least one modular setpoint generator 18, additional setpoints; combining S3, by a control unit 20, the first setpoints and the additional setpoints into combined setpoints; and controlling S4 the actuators based on the combined setpoints to move the mover 14 along the trajectory with an additional movement pattern.

## Claims

1. Planar transport system (1) comprising:
a transport surface (10) subdivided into a plurality of controllable tiles (12), each tile comprising an array of actuators for manipulating a magnetic field to move at least one mover (14) over the transport surface (10);
at least one mover (14) configured to move over the transport surface (10) by magnetic interaction with the actuators;
at least one primary setpoint generator (16) configured to generate first setpoints defining a trajectory for the mover (14);
at least one modular setpoint generator (18) configured to generate additional setpoints; and
a control unit (20) configured to combine the first setpoints and the additional setpoints into combined setpoints and to control the actuators based on the combined setpoints to move the mover (14) along the trajectory with an additional movement pattern.

2. Planar transport system of claim 1, wherein the additional setpoints generated by the at least one modular setpoint generator (18) define at least one of an oscillatory movement, a rotational movement, or a translational modulation superimposed on the trajectory of the mover (14).

3. Planar transport system of claim 1 or 2, wherein the control unit (20) comprises a transition module (22) configured to implement a time-based transition function between activation and deactivation of the modular setpoint generator (18), the transition function defining a gradual blending of the additional setpoints with the first setpoints.

4. Planar transport system according to claim 3, wherein the transition module (22) is configured to allow adjustment of at least one transition parameter, the transition parameter comprising a duration or a curve shape of the time-based transition function.

5. Planar transport system of any one of the preceding claims, wherein the at least one modular setpoint generator (18) is implemented as a loadable software module configured to be uploaded into a memory of the control unit (20) and executed by the control unit (20), the software module being programmable to define user-specific movement patterns.

6. Planar transport system of any one of the preceding claims, wherein the control unit (20) is configured to assign different modular setpoint generators (18) to different movers (14), allowing independent superimposed movement patterns for multiple movers (14) operating simultaneously on the transport surface (10).

7. Planar transport system of any one of the preceding claims, further comprising at least one sensor (24) configured to detect at least one of a position and/or an orientation of the mover (14), the control unit (20) being configured to adjust the combined setpoints based on feedback from the sensor (24).

8. Planar transport system of any one of the preceding claims, wherein the control unit (20) comprises a distributed architecture including a central controller configured to combine the first setpoints and the additional setpoints into combined setpoints defining the mover trajectory, and to calculate actuator-specific control data based on the combined setpoints, the local controllers being provided in each tile and configured to receive the actuator-specific control data from the central controller and to control the actuators within the respective tile based on the actuator-specific control data.

9. Planar transport system of any one of the preceding claims, wherein the at least one mover (14) comprises a floating body with a magnetic element, the magnetic element being configured to interact with the magnetic fields of the actuators to enable levitation and multi-axis movement over the transport surface (10).

10. A computer-implemented method for controlling a planar transport system, the planar transport system comprising a transport surface (10) subdivided into a plurality of controllable tiles (12), each tile comprising an array of actuators for manipulating a magnetic field to move at least one mover (14) over the transport surface (10), the method comprising:
generating (S1), by at least one primary setpoint generator (16), first setpoints defining a trajectory for the mover (14);
generating (S2), by at least one modular setpoint generator (18), additional setpoints;
combining (S3), by a control unit (20), the first setpoints and the additional setpoints into combined setpoints; and
controlling (S4) the actuators based on the combined setpoints to move the mover (14) along the trajectory with an additional movement pattern.

11. Computer program with program code to perform the method of claim 10 when the computer program is executed on a computer.

12. Computer-readable data carrier containing program code of a computer program for performing the method of claim 10 when the computer program is executed on a computer.
